Europäisches Patentamt

European Patent Office

Office européen des brevets

(11) Veröffentlichungsnummer: **0 254 839**

**A1**

(12) **EUROPÄISCHE PATENTANMELDUNG**

(21) Anmeldenummer: 87107935.6

(22) Anmeldetag: 02.06.87

(51) Int. Cl.⁴: **G01N 31/22** , G01N 21/77

(30) Priorität: 24.06.86 DE 3621075

(43) Veröffentlichungstag der Anmeldung:
03.02.88 Patentblatt 88/05

(84) Benannte Vertragsstaaten:
DE GB IT NL

(71) Anmelder: **Drägerwerk Aktiengesellschaft**
**Moislinger Allee 53-55**
**D-2400 Lübeck 1(DE)**

(72) Erfinder: **Leichnitz, Kurt**
**Am Waldrand 42**
**D-2401 Gross Grönau(DE)**
Erfinder: **Matthiessen, Hans, Dipl.-Ing.**
**Heischbrook 22**
**D-2407 Gross Parin(DE)**

(54) **Prüfröhrchen für brennbare Gase.**

(57) Ein Prüfröhrchen für brennbare Gase soll mit Schutzvorrichtungen versehen werden, so daß es für den Nachweis von brennbaren Gasen nicht zu einer Zündquelle werden kann. Dazu ist vorgesehen, daß vor und/oder hinter der Reagenzfüllung (10) eine Flammensperre (7, 8) angeordnet ist.

Fig. 1

## Prüfröhrchen für brennbare Gase

Die Erfindung betrifft ein Prüfröhrchen für brennbare Gase.

Ein derartiges Prüfröhrchen ist aus DE-GM 19 74 909 bekannt.

Zum Nachweis verschiedener brennbarer Gase mittels Prüfröhrchen werden zur Erreichung von nachweisbaren Reaktionsprodukten in dem Prüfröhrchen Katalysatoren eingesetzt, welche unter erheblicher Wärmeabgabe das nachzuweisende Gas umsetzen (z. B. Wasserstoff mit Luftsauerstoff auf Palladium oder Hopkalit). Andere Gase, wie z. B. Schwefelkohlenstoff und Schwefelwasserstoff, zeigen bei der Reaktion mit dem Nachweisreagenz in dem Indikator eine exotherme Reaktion. In allen diesen Fällen können im Glasröhrchen bei großen Konzentrationen hohe Reaktionstemperaturen auftreten. Bei Überschreiten einer bestimmten Konzentrationsgrenze (untere Explosionsgrenze) wird das Gasgemisch explosibel, so daß die Gefahr besteht, daß das Prüfröhrchen mit seinen hohen Reaktionstemperaturen zur Zündquelle wird.

Aus der US-PS 4 159 304 ist ein durchströmbares Gehäuse für die Aufnahme eines Prüfröhrchens bekannt.

Das bekannte Gehäuse dient zum Schutz des Prüfröhrchens vor mechanischer Beschädigung, wenn es von seinem Träger während der Arbeitszeit unter erschwerten Bedingungen, wie sie z. B. in Industrieanlagen vorliegen, mitgeführt wird. Das bekannte Gehäuse besitzt Anschlüsse zum Ansaugen einer Gasprobe über eine Förderpumpe, so daß die Gasprobe durch das in dem Gehäuse aufgenommene Prüfröhrchen bei geöffneten Prüfröhrchenenden hindurchströmen kann. Zum Nachweis, ob in der entnommenen Gasprobe Schadstoff vorhanden war, kann das Gehäuse auseinandergeschraubt und das Prüfröhrchen entnommen werden. Eine Fortpflanzung einer durch das Prüfröhrchen möglicherweise verursachten Entzündung in den Umgebungsraum des Gehäuses wird dadurch nicht verhindert.

Der Erfindung liegt somit die Aufgabe zugrunde, ein Prüfröhrchen der genannten Art mit Schutzvorrichtungen zu versehen, so daß es für den Nachweis von brennbaren Gasen nicht zu einer Zündquelle werden kann.

Die Lösung der Aufgabe erfolgt dadurch, daß vor und/oder hinter der Reagenzfüllung eine Flammensperre angeordnet ist.

Der durch die Erfindung erzielte Vorteil liegt hauptsächlich darin, daß das bei hohen Konzentrationen im Reagenz des Prüfröhrchens entstandene erhitzte Gasgemisch oder eine auftretende Verbrennung sich nicht ausbreiten und zu einer Entzündung eines explosiblen Gasgemisches im Aufenthaltsbereich des Geräteträgers führen kann.

Zweckmäßigerweise werden die Flammensperren in den Spitzen des üblicherweise verwendeten Glasröhrchens eingesetzt. Das Glas isoliert die auftretende Reaktionstemperatur so weit, daß die Oberflächentemperatur des Glases die Zündtemperatur nicht erreicht. Die Prüfröhrchen sind dann nach wie vor in den bekannten Gehäusen einsetzbar.

Zur Erhöhung der Betriebssicherheit kann das Prüfröhrchen in einem Schutzgehäuse aufgenommen sein, das gleichzeitig die Flammensperren enthält. Die Flammensperren können dabei größer und mit geringerem Strömungswiderstand ausgebildet sein und für wiederholte Benutzung bei verschiedenen Prüfröhrchen verwendet werden. Die Prüfröhrchen selbst brauchen die Flammensperren dann nicht mehr zu tragen.

Vorteilhafterweise werden die Flammensperren in einem Ansaugstutzen und einem Auslaßstutzen des Gehäuses angeordnet. Beide Stutzen können schraubbar mit dem Gehäuse verbunden sein, so daß ein Auswechseln der Flammensperren und des Prüfröhrchens auf leichte Weise möglich ist.

Ein Ausführungsbeispiel der Erfindung wird anhand der schematischen Zeichnung näher dargestellt und im folgenden erläutert. Es zeigen:

Figur 1 einen Querschnitt durch das Gehäuse mit eingelegtem Prüfröhrchen,

Figur 2 einen Querschnitt durch ein Prüfröhrchen mit Flammensperren.

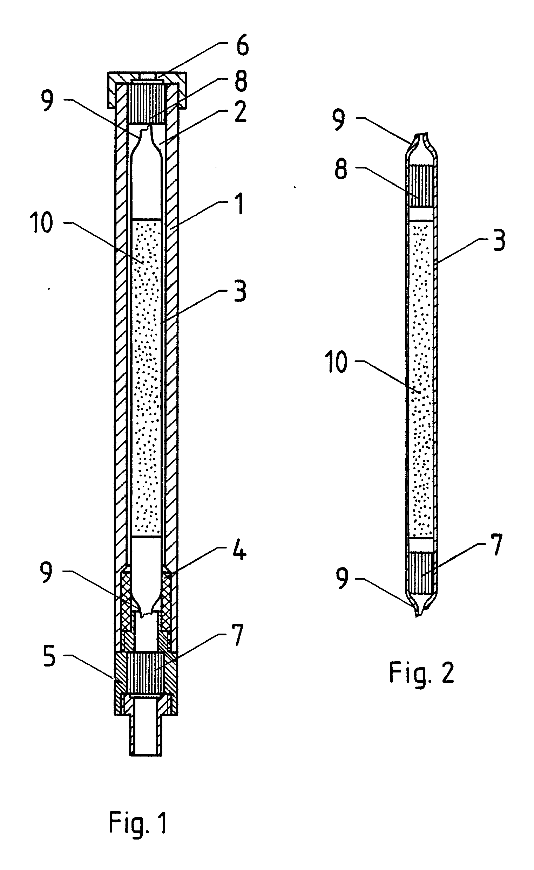

In Figur 1 ist ein transparentes Gehäuse (1) im Schnitt dargestellt, welches in seinem länglichen, rohrförmigen Hohlraum (2) ein Prüfröhrchen (3) aufnimmt, welches in einem Halter (4) gehalten ist. Die beiden Enden des Gehäuses (1) sind mit einem Ansaugstutzen (5) zum Anschluß einer nicht dargestellten Förderpumpe und mit einem Einlaßstutzen (6) für den Einlaß des zu untersuchenden Gasgemisches versehen. Der Ansaugstutzen (5) ist mit einem entsprechenden Gewinde in das Gehäuse (1) einschraubbar und mit einer Tülle versehen. Der Einlaßstutzen (6) ist als Kappe ausgebilüet, die auf das Ende des Gehäuses (1) aufsetzbar ist. Sowohl im Ansaugstutzen (5) als auch im Einlaßstutzen (6) sind eine Flammensperre (7, 8) eingebaut. Diese Flammensperren können bekannte Metallsinterscheiben sein, oder sie bestehen aus einem Bündel von geeigneten Kapillarrohren.

Das durch den Einlaßstutzen (6) angesaugte Gas tritt durch die Flammensperre (8) in den Hohlraum (2) und von dort durch die geöffneten Spitzen (9) des Prüfröhrchens (3) durch die Flammensperre (7) des Ansaugstutzens (5). Beim Durchgang der Gasprobe durch das Prüfröhrchen (3) wird der Schadstoff in dem Farbindikator (10) umgesetzt. Das durch eine exotherme Reaktion erhitzte Gas kann wegen beider Flammensperren (7, 8) nicht zu einer Zündquelle für das in der Umgebung befindliche Gasgemisch werden.

Das in Figur 2 im Schnitt dargestellte Prüfröhrchen (3) besitzt in seinen beiden Spitzen (9) die Flammensperren (7, 8), welche den Farbindikator (10) einschließen.

**Ansprüche**

1. Prüfröhrchen für brennbare Gase, dadurch gekennzeichnet, daß vor und/oder hinter der Reagenzfüllung (10) eine Flammensperre (7, 8) angeordnet ist.

2. Prüfröhrchen nach Anspruch 1, dadurch gekennzeichnet, daß die Flammensperren (7, 8) in den Spitzen (9) des Prüfröhrchens (3) aufgenommen sind.

3. Prüfröhrchen nach Anspruch 1, dadurch gekennzeichnet, daß es in einem durchströmbaren Gehäuse (1) aufgenommen ist, in welchem die Flammensperren (7, 8) angeordnet sind.

4. Prüfröhrchen nach Anspruch 3, dadurch gekennzeichnet, daß jeweils eine Flammensperre (7, 8) in einem Ansaugstutzen (5) und in einem Einlaßstutzen (6) des Gehäuses (1) eingebaut ist.

Fig. 1

Fig. 2

## EINSCHLÄGIGE DOKUMENTE

EP 87107935.6

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | US - A - 4 159 304 (SHONO) <br> * Ansprüche * <br> -- | 1 | G 01 N 31/22 <br> G 01 N 21/77 |
| D,A | DE - U1 - 1 974 909 (DRÄGERWERK) <br> ---- | 1 | |

RECHERCHIERTE
SACHGEBIETE (Int. Cl.4)

G 01 N

Der vorliegende Recherchenbericht wurde für alle Patentansprüche erstellt.

| Recherchenort | Abschlußdatum der Recherche | Prüfer |
|---|---|---|
| WIEN | 16-1-1987 | TENGLER |